# EUROPEAN PATENT APPLICATION

(11) **EP 4 574 281 A1**
(43) Date of publication of application: **25.06.2025**
(21) Application number: 24837527.1
(22) Date of filing: 03.07.2024
(51) Int. Cl.: B07B 1/28, B07B 1/42, B07B 1/46, A01K 1/01

(54) **ANIMAL FECES SCREENING APPARATUS**

(30) Priority: 25.10.2023 CN 202311390103
(71) Applicant: PETKIT NETWORK TECHNOLOGY (SHANGHAI) CO., LTD., Shanghai 201100 (CN)
(72) Inventor: XU, Ruohang, Shanghai 201100 (CN); GUO, Weike, Shanghai 201100 (CN); GUO, Weixue, Shanghai 201100 (CN); MA, Yunxin, Shanghai 201100 (CN); LIU, Xingling, Shanghai 201100 (CN); YANG, Lusheng, Shanghai 201100 (CN); MA, Xiaoqing, Shanghai 201100 (CN); ZHANG, Junchao, Shanghai 201100 (CN); LIU, Guojun, Shanghai 201100 (CN)
(74) Representative: Cabinet Beaumont
(86) International application number: PCT/CN2024/103346
(87) International publication number: WO 2025/086709

(57) **Abstract**

Provided is an animal excrement screener. The animal excrement screener includes a box body, a driving mechanism, two flip covers, a rotating member, and a screening mechanism. The two flip covers are rotatably disposed at two ends of the box body respectively and separate the box body into a squatting region and two excrement collecting regions. The rotating member is rotatably disposed on the box body and abuts against a side edge of a flip cover. The screening mechanism is slidably disposed on the box body. The driving mechanism is drivingly connected to the screening mechanism. The driving mechanism is configured to drive the screening mechanism to move and abut against the rotating member so that the rotating member can open the flip cover and push excrement in the squatting region into the two excrement collecting regions.

## Description

This application claims priority to Chinese Patent Application No. 202311390103.9 filed with the China National Intellectual Property Administration (CNIPA) on Oct. 25, 2023, the disclosure of which is incorporated herein by reference in its entirety.

### TECHNICAL FIELD

The present application relates to the technical field of pet supplies, for example, to an animal excrement screener.

### BACKGROUND

Trained cats excrete on cat litter and bury the excrement when they need to defecate, so the cat litter may be used for collecting the excrement.

The cat litter is often laid at the bottom of a cat litter basin, and collecting the excrement requires manual panning, increasing the workload of keeping cats. Moreover, some keepers choose to throw away the cat litter and the excrement together, increasing the cost of keeping cats. To solve the preceding problems, in the related art, pet excrement is unidirectionally screened to an excrement collecting box on one side. If there is an omission on the side, or a pet defecates again during the machine operation, the excrement remains in a pet toilet and cannot enter the excrement collecting box, which continues to generate a strong odor.

### SUMMARY

The present application provides an animal excrement screener with two excrement collecting regions on two sides of a box body, which facilitates the entrance of excrement and eliminates cleaning dead corners while preventing odor of the excrement in the two excrement collecting regions from overflowing.

An embodiment of the present application provides an animal excrement screener.

The animal excrement screener includes a box body, a driving mechanism, two flip covers, and a screening mechanism.

The driving mechanism is disposed on the box body.

The two flip covers are rotatably disposed at two ends of the box body respectively and configured to separate the box body into a squatting region and excrement collecting regions.

The rotating member is rotatably disposed on the box body and configured to abut against a side edge of a flip cover of the two flip covers.

The screening mechanism is slidably disposed on the box body, the driving mechanism is drivingly connected to the screening mechanism, and the driving mechanism is configured to drive the screening mechanism to move and abut against the rotating member to enable the rotating member to open the flip cover and push excrement in the squatting region into the excrement collecting regions.

### BRIEF DESCRIPTION OF DRAWINGS

FIG. 1 is diagram one illustrating the structure of an animal excrement screener according to an embodiment of the present application.
FIG. 2 is cross-sectional view one of an animal excrement screener according to an embodiment of the present application.
FIG. 3 is diagram two illustrating the structure of an animal excrement screener according to an embodiment of the present application.
FIG. 4 is cross-sectional view two of an animal excrement screener according to an embodiment of the present application.
FIG. 5 is diagram three illustrating the structure of an animal excrement screener according to an embodiment of the present application.
FIG. 6 is cross-sectional view three of an animal excrement screener according to an embodiment of the present application.
FIG. 7 is diagram four illustrating the structure of an animal excrement screener according to an embodiment of the present application.
FIG. 8 is cross-sectional view four of an animal excrement screener according to an embodiment of the present application.

Reference list
- 1: box body
- 11: squatting region
- 12: excrement collecting region
- 13: step surface
- 2: driving mechanism
- 21: motor
- 22: screw rod
- 3: flip cover
- 4: rotating member
- 41: contact portion
- 42: connection portion
- 43: flip portion
- 5: filter screen
- 51: screening portion
- 52: sliding portion
- 53: rotating portion
- 6: sliding member
- 7: transmission belt

### DETAILED DESCRIPTION

In the description of the present application, the terms "joined", "connected", and "secured" are to be understood in a broad sense unless otherwise expressly specified and limited. For example, the term "connected" may refer to "securely connected", "detachably connected", or "integrated"; may refer to "mechanically connected" or "electrically connected"; or may refer to "connected directly", "connected indirectly through an intermediary", "connected inside two components", or an interaction relation between two components. For those of ordinary skill in the art, specific meanings of the preceding terms in the present application may be understood based on specific situations.

In the present application, unless otherwise expressly specified and limited, when a first feature is described as being "on" or "below" a second feature, the first feature and the second feature may be in direct contact or be in contact via another feature between the two features instead of being in direct contact. Moreover, when the first feature is described as being "on", "above", or "over" the second feature, the first feature is right on, above, or over the second feature, the first feature is obliquely on, above, or over the second feature, or the first feature is simply at a higher level than the second feature. When the first feature is described as being "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. In addition, the terms "first" and "second" are only used for distinguishing between descriptions and have no special meanings.

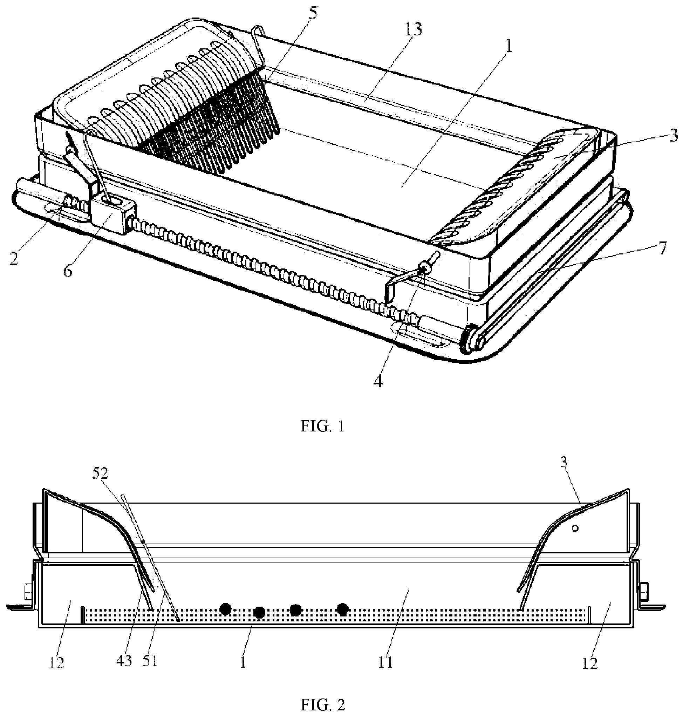

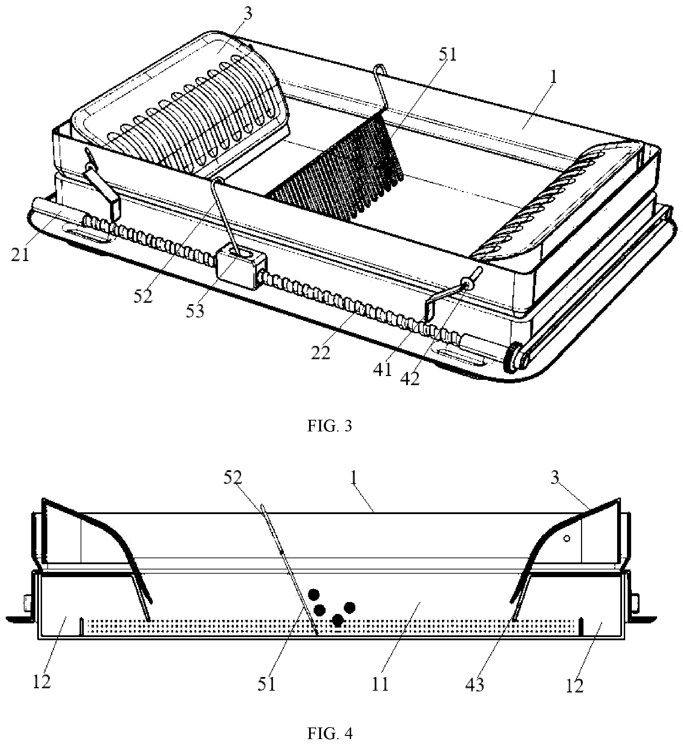

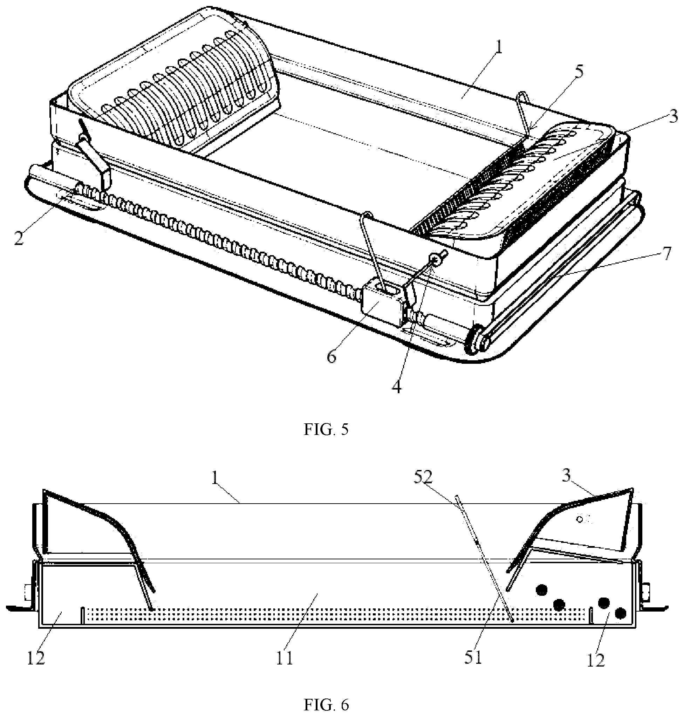

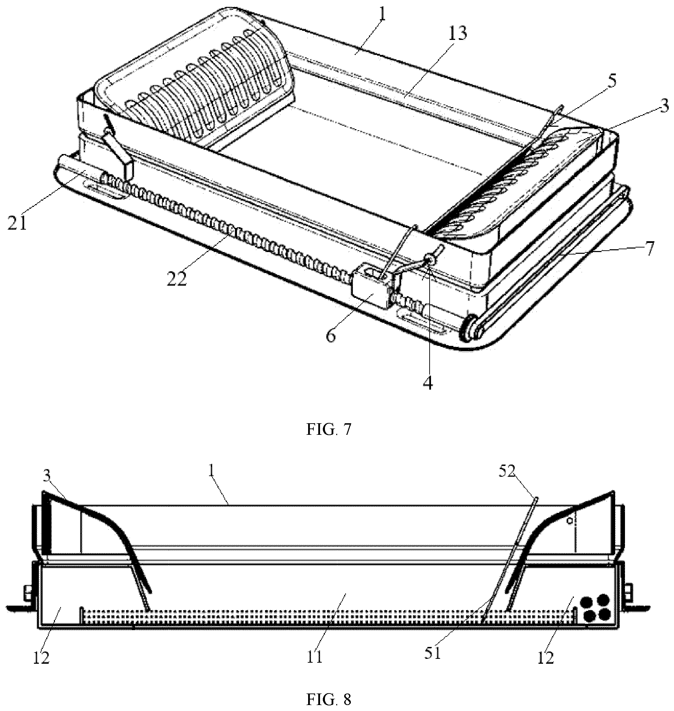

As shown in FIGS. 1 to 8, in this embodiment, an animal excrement screener includes a box body 1, a driving mechanism 2, two flip covers 3, a rotating member 4, and a screening mechanism. The driving mechanism 2 is disposed on the box body 1. The two flip covers 3 are rotatably disposed at two ends of the box body 1 respectively and separate the box body 1 into a squatting region 11 and excrement collecting regions 12. The rotating member 4 is rotatably disposed on the box body 1 and abuts against a side edge of a flip cover 3. The screening mechanism is slidably disposed on the box body 1, and the driving mechanism 2 is drivingly connected to the screening mechanism. The driving mechanism 2 can drive the screening mechanism to move and abut against the rotating member 4 so that the rotating member 4 can open the flip cover 3 and push excrement in the squatting region 11 into the excrement collecting regions 12. In an embodiment, cat litter may be accommodated within the box body 1 to facilitate the collection of excrement defecated by a pet; the two flip covers 3 separate the box body 1 into the squatting region 11 in the middle and excrement collecting regions 12; the two ends of the box body 1 are each provided with one excrement collecting region 12; the screening mechanism is configured to screen the excrement in the cat litter; the driving mechanism 2 is configured to drive the screening mechanism to move relative to the box body 1. After the pet leaves behind the excrement and others, under the driving action of the driving mechanism 2, the screening mechanism reciprocates in the length direction of the box body 1 (referring to the arrow direction of FIG. 1) to push the screened excrement into the outer side of the flip cover 3, and then the screening mechanism moves and abuts against the rotating member 4. The rotating member 4 rotates relative to the box body 1 and pushes the flip cover 3 open. The flip cover 3 is opened, and the excrement is pushed from the outer side of the flip cover 3 into an excrement collecting region 12 within the flip cover 3, which facilitates the entrance of the excrement. After the excrement enters, the screening mechanism moves in the opposite direction, the rotating member 4 returns to the initial position, and the flip cover 3 is closed to prevent the odor of the excrement in the excrement collecting region 12 from overflowing. The two ends of the box body 1 are provided with the excrement collecting regions 12 respectively. The excrement screened by the screening mechanism is pushed into the excrement collecting regions 12 at the two ends of the box body 1. Therefore, no cleaning dead corner exists, and the excrement in the squatting region 11 is not omitted.

With continued reference to FIGS. 1 to 8, the screening mechanism includes a filter screen 5 and a sliding member 6. The sliding member 6 is connected to the filter screen 5 and slidably disposed on the box body 1. The filter screen 5 is located within the box body 1. The driving mechanism 2 can drive the sliding member 6 to move and abut against the rotating member 4 so that the rotating member 4 can open the flip cover 3. The filter screen 5 is configured to screen the excrement in the squatting region 11 and push the screened excrement into the excrement collecting region 12. In an embodiment, the sliding member 6 is hung on the sidewall of the box body 1, which facilitates disassembly, installation, and debugging. Under the action of the driving mechanism 2, the sliding member 6 is driven to slide relative to the box body 1 so that the filter screen 5 can reciprocate within the box body 1 to screen the excrement. Moreover, the sliding member 6 can abut against the rotating member 4 so that the rotating member 4 can rotate and open the flip cover 3 and so that the filter screen 5 can smoothly push the screened excrement from the squatting region 11 into the excrement collecting region 12 through the opened flip cover 3.

In an embodiment, with continued reference to FIGS. 1 to 8, the filter screen 5 includes a screening portion 51, a sliding portion 52, and a rotating portion 53. Two ends of the sliding portion 52 are connected to the rotating portion 53 and the screening portion 51 respectively. The screening portion 51 is located within the box body 1 and configured to screen the excrement. The sliding portion 52 is slidably disposed on the sidewall of the box body 1. The rotating portion 53 is rotatably connected to the sliding member 6 and can drive the screening portion 51 to swing in the moving direction. In an embodiment, the sliding portion 52 is hung on the sidewall of the box body 1, and the sliding member 6 can drive the sliding portion 52 to slide; to ensure that the screening portion 51 can push the screened excrement into excrement collecting regions 12 on two sides of the box body 1, under the action of the rotating portion 53, the screening portion 51 swings back and forth in the forward direction so that the screening portion 51 can be disposed at an acute angle with the flip cover 3 to conveniently push the excrement smoothly from the middle squatting region 11 into the two excrement collecting regions 12. In an embodiment, two rotating members 4 are provided and located at the two ends of the box body respectively; the sliding member 6 slides between the two rotating members 4; the two rotating members 4 are in one-to-one correspondence with the two flip covers 3; the sliding member 6 can slide back and forth relative to the box body 1 to drive the two rotating members 4 to rotate, thereby opening or closing the two flip covers 3 respectively.

In an embodiment, with continued reference to FIGS. 1 to 8, two inner sidewalls of the box body 1 are convexly provided with step surfaces 13 respectively, and two sides of the screening portion 51 contact the step surfaces 13 and can slide relative to the step surfaces 13. In an embodiment, the sliding portion 52 can be directly hung on the sidewall of the box body 1 while the two sides of the screening portion 51 abut against the step surfaces 13, and the step surfaces 13 support the screening portion 51 so that a clearance can always exist between the sliding portion 52 and the top surface of the sidewall of the box body 1, thereby ensuring that the filter screen 5 can slide smoothly. In addition, the step surfaces 13 can also prevent a cat from pawing the cat litter into the interior of the screener when the cat paws the cat litter in the process of burying the excrement, thereby ensuring the normal operation of the device.

In an embodiment, with continued reference to FIGS. 1 to 8, the screening portion 51 is inclined relative to the vertical direction and includes a first end and a second end; the first end is higher than the second end; in the moving direction of the screening portion 51, the distance from the second end to the flip cover 3 is less than the distance from the first end to the flip cover 3; the second end can contact or be separated from the flip cover 3 to open or close the flip cover 3. In an embodiment, the screening portion 51 can push the excrement screened from the squatting region 11 into the excrement collecting regions 12 on the two sides of the box body 1; when the screening portion 51 moves and pushes the excrement into one of the excrement collecting regions 12, in the moving direction of the screening portion 51 (referring to the arrow direction of FIG. 1), the distance from the second end of the screening portion 51 to the flip cover 3 is less than the distance from the first end of the screening portion 51 to the flip cover 3, and the second end of the screening portion 51 can contact the flip cover 3 to open the flip cover 3; after all the excrement is pushed into the excrement collecting region 12, under the action of the rotating portion 53, the screening portion 51 is driven to flip to be parallel to the flip cover 3; in this case, the screening portion 51 is separated from the flip cover 3, and the flip cover 3 is closed to prevent the odor from escaping.

In an embodiment, with continued reference to FIGS. 1 to 8, the driving mechanism 2 includes a motor 21 and a screw rod 22; the motor 21 is installed on the box body 1, and an output end of the motor 21 is connected to the screw rod 22; the sliding member 6 is provided with a threaded hole, and the screw rod 22 rotatably passes through the threaded hole. In an embodiment, the motor 21 is started to drive the screw rod 22 to rotate, and the screw rod 22 drives the sliding member 6 to slide in the length direction of the screw rod 22 so that the filter screen 5 can screen the excrement and push the excrement into one of the excrement collecting regions 12; the motor 21 is reversed to drive the screw rod 22 to rotate in the opposite direction, and the screw rod 22 drives the sliding member 6 to slide in the opposite direction so that the filter screen 5 can push the screened excrement into the other one of the excrement collecting regions 12. In an embodiment, two driving mechanisms 2 are provided and disposed at the two ends of the box body 1 respectively; a transmission belt 7 is connected to the two driving mechanisms 2 in a transmission manner; one screw rod 22 drives the other screw rod 22 to rotate in the same direction through the action of the transmission belt 7. In an embodiment, the driving mechanism 2 not only includes the transmission mode of a screw rod but may also include transmission modes of a gear, a chain, a belt, a worm gear, and others. Details are not repeated herein.

In an embodiment, with continued reference to FIGS. 1 to 8, the rotating member 4 includes a contact portion 41, a connection portion 42, and a flip portion 43; the box body 1 is provided with a waist-shaped hole, and the connection portion 42 rotatably passes through the waist-shaped hole; two ends of the connection portion 42 are connected to the contact portion 41 and the flip portion 43 respectively; the contact portion 41 can abut against the sliding member 6 so that the flip portion 43 can open the flip cover 3. Under the driving action of the motor 21, the screw rod 22 drives the sliding member 6 to slide in the length direction of the screw rod 22 so that the sliding member 6 can abut against the contact portion 41, thereby driving the flip portion 43 to abut against the inner sidewall of the flip cover 3 to open the flip cover 3, and so that the filter screen 5 can push the screened excrement from the squatting region 11 into the excrement collecting region 12 conveniently. Conversely, the motor 21 is reversed, and the screw rod 22 drives the sliding member 6 to slide in the opposite direction along the length direction of the screw rod 22 so that the sliding member 6 can be separated from the contact portion 41, the flip portion 43 can return to the initial position, and the flip cover 3 can be closed.

## Claims

1. An animal excrement screener, comprising:
a box body (1);
a driving mechanism (2) disposed on the box body (1);
two flip covers (3) rotatably disposed at two ends of the box body (1) respectively and configured to separate the box body (1) into a squatting region (11) and excrement collecting regions (12);
a rotating member (4) rotatably disposed on the box body (1) and configured to abut against a side edge of a flip cover (3) of the two flip covers (3); and
a screening mechanism, wherein the screening mechanism is slidably disposed on the box body (1), the driving mechanism (2) is drivingly connected to the screening mechanism, and the driving mechanism (2) is configured to drive the screening mechanism to move and abut against the rotating member (4) to enable the rotating member (4) to open the flip cover (3) and push excrement in the squatting region (11) into the excrement collecting regions (12).

2. The animal excrement screener of claim 1, wherein the screening mechanism comprises a filter screen (5) and a sliding member (6), wherein the sliding member (6) is connected to the filter screen (5) and slidably disposed on the box body (1), the filter screen (5) is located within the box body (1), the driving mechanism (2) is drivingly connected to the sliding member (6) and configured to drive the sliding member (6) to move to enable the sliding member (6) to abut against the rotating member (4) and open the flip cover (3), and the filter screen (5) is configured to screen excrement in the squatting region (11) and push screened excrement into the excrement collecting regions (12).

3. The animal excrement screener of claim 2, wherein the filter screen (5) comprises a screening portion (51), a sliding portion (52), and a rotating portion (53), wherein two ends of the sliding portion (52) are connected to the rotating portion (53) and the screening portion (51) respectively, the screening portion (51) is located within the box body (1) and configured to screen excrement, the sliding portion (52) is slidably disposed on a sidewall of the box body (1), and the rotating portion (53) is rotatably connected to the sliding member (6) and configured to drive the screening portion (51) to swing in a moving direction.

4. The animal excrement screener of claim 3, wherein an inner sidewall of the box body (1) is convexly provided with a step surface (13), and two ends of the screening portion (51) contact the step surface (13) and are configured to slide relative to the step surface (13).

5. The animal excrement screener of claim 3, wherein the screening portion (51) is inclined relative to a vertical direction and comprises a first end and a second end, wherein the first end is higher than the second end; and
in a moving direction of the screening portion (51), a distance from the second end to the flip cover (3) is less than a distance from the first end to the flip cover (3), and the second end is capable of being in contact with or separated from the flip cover (3) to open or close the flip cover (3).

6. The animal excrement screener of claim 2, wherein the rotating member (4) comprises a contact portion (41), a connection portion (42), and a flip portion (43); the box body (1) is provided with a waist-shaped hole, the connection portion (42) rotatably passes through the waist-shaped hole, two ends of the connection portion (42) are connected to the contact portion (41) and the flip portion (43) respectively, and the contact portion (41) is configured to abut against the sliding member (6) to enable the flip portion (43) to open the flip cover (3).

7. The animal excrement screener of claim 2, wherein two rotating members (4) are provided and located at the two ends of the box body (1) respectively, and the sliding member (6) is configured to slide between the two rotating members (4).

8. The animal excrement screener of claim 2, wherein the driving mechanism (2) comprises a motor (21) and a screw rod (22), wherein the motor (21) is installed on the box body (1), an output end of the motor (21) is connected to the screw rod (22), the sliding member (6) is provided with a threaded hole, and the screw rod (22) rotatably passes through the threaded hole.

9. The animal excrement screener of claim 1, wherein two driving mechanisms (2) are provided and disposed at the two ends of the box body (1) respectively.

10. The animal excrement screener of claim 9, further comprising a transmission belt (7) connected to the two driving mechanisms (2) in a transmission manner.
